# EUROPEAN PATENT APPLICATION

(11) **EP 3 951 186 A1**
(43) Date of publication of application: **09.02.2022**
(21) Application number: 20779032.0
(22) Date of filing: 13.03.2020
(51) Int. Cl.: F04D 19/04, F16J 15/10

(54) **VACUUM PUMP AND SEAL MEMBER FOR USE IN VACUUM PUMP**

(30) Priority: 25.03.2019 JP 2019056085
(71) Applicant: Edwards Japan Limited, Yachiyo-shi, Chiba 276-8523 (JP)
(72) Inventor: TAKAADA Tsutomu, Yachiyo-shi Chiba 276-8523 (JP)
(74) Representative: Totman, Clare Elizabeth
(86) International application number: PCT/JP2020/011070
(87) International publication number: WO 2020/195941

(57) **Abstract**

To provide a vacuum pump with a small number of components and superior sealing properties. The vacuum pump includes: a plurality of stator blades provided towards a center of an intake-side casing; a rotor shaft which is enclosed by and rotatably supported by intake-side casing; a plurality of rotor blades which are radially provided around the rotor shaft; a motor that rotates the rotor shaft; and an annular sealing member which elastically deforms under a sandwiching force in a thickness direction produced by the intake-side casing and an exhaust-side casing and which maintains airtightness between the intake-side casing and the exhaust-side casing, wherein a cross section of the sealing member includes: a deformation promoting portion which is formed in an outer peripheral portion in a recessed shape; and a sealing portion which receives the force at an eccentric position approaching the deformation promoting portion.

## Description

The present invention relates to a vacuum pump such as a turbo-molecular pump and to a sealing member used in the vacuum pump.

Generally, a turbo-molecular pump is known as one type of a vacuum pump. The turbo-molecular pump is configured to rotate a rotor blade by energizing a motor inside a pump main body and exhaust gas having been sucked into the pump main body by blowing away a particle of the gas. In addition, such a turbo-molecular pump adopts a seal structure using a sealing member (O ring) that is an elastic body. Furthermore, in the turbo-molecular pump, airtightness between components is maintained by sandwiching the sealing member between the components and squashing the sealing member to a certain degree.

Seal structures such as that described above include those which sandwich the sealing member from a side surface (an outer diameter direction) or those which sandwich the sealing member from top and bottom surfaces (an axial direction). In addition, generally, vacuum grease is applied to the sealing member so that, during assembly of the turbo-molecular pump, the sealing member does not deform due to twisting (torsional deformation) or break by being caught on a component which the sealing member comes into contact with.

In addition, during assembly of the turbo-molecular pump, dimensional tolerances related to a plurality of components stack up and, usually, a cumulative tolerance that represents a sum of the tolerances is not uniform. Therefore, since an amount by which adjacent components squash the sealing member (a squashing margin of the sealing member) may sometimes vary for each turbo-molecular pump (a fluctuation in the squashing margin), an amount by which the sealing member is squashed (distortion) is not always constant. Furthermore, even when using a sealing member being made of a same material or having a same size, there are cases where a difference in sealing performance arises due to a difference in the squashing margin of the sealing member.

Furthermore, there are turbo-molecular pumps which use a plurality of layered sealing members or spacers in order to reduce, per each sealing member, a variation in squashing margins of the sealing member due to cumulative tolerance and increase an amount of fluctuation in a squashing margin width that can be accommodated by the sealing members as a whole (Japanese Patent No. 6113071). According to such a turbo-molecular pump, a difference in squashing margins can be accommodated in a flexible manner, and since a torsional deformation, a catch, or the like is less likely to occur on the sealing member, there is no longer a need to use vacuum grease. In addition, even when the dimensional tolerance of peripheral components is relatively large and a variation in the squashing margin of the sealing member increases, appropriate sealing performance can be exhibited.

With a vacuum pump in which vacuum grease is applied to the sealing member among the various vacuum pumps described above, the vacuum grease may enter an exhaust path of a vacuum system due to factors such as evaporation and cause a contamination (vacuum contamination) in a vacuum environment. In addition, with a vacuum pump of the type disclosed in Japanese Patent No. 6113071, the use of a plurality of sealing members and the positioning of spacers between the sealing members result in an increased number of components. Therefore, with a vacuum pump of the type disclosed in Japanese Patent No. 6113071, cost may increase or assemblability (ease of assembly) may decline.

An object of the present invention is to provide a vacuum pump with a small number of components and superior sealing properties and a sealing member capable of exhibiting high sealing properties with a small number of components.

(1) In order to achieve the object described above, the present invention provides a vacuum pump including:
   an intake-side component having an intake portion of gas;
   an exhaust-side component which is combined with the intake-side component;
   a rotating shaft which is enclosed by and rotatably supported by the intake-side component;
   a motor that rotates the rotating shaft; and
   an annular sealing member which elastically deforms under a sandwiching force in a thickness direction produced by the intake-side component and the exhaust-side component and which maintains airtightness between the intake-side component and the exhaust-side component, wherein the sealing member has:
      a deformation promoting portion formed in an outer peripheral portion in a recessed shape; and
      a sealing portion which receives the force at an eccentric position approaching the deformation promoting portion.
(2) In addition, in order to achieve the object described above, the present invention also provides the vacuum pump according to (1) described above, further including a mounting portion which is formed in a planar shape in an inner peripheral portion and which comes into surface contact with any one of the intake-side component and the exhaust-side component.
(3) In addition, in order to achieve the object described above, the present invention also provides an annular sealing member which elastically deforms under a sandwiching force in a thickness direction produced by an intake-side component and an exhaust-side component of a vacuum pump, the sealing member including:
   a deformation promoting portion formed in an outer peripheral portion in a recessed shape; and
   a sealing portion which receives the force at an eccentric position approaching the deformation promoting portion.
(4) In addition, in order to achieve the object described above, the present invention also provides the sealing member according to (3) described above, further including a mounting portion which is formed in a planar shape in an inner peripheral portion and which comes into surface contact with any one of the intake-side component and the exhaust-side component.

According to the invention described above, a vacuum pump with a small number of components and superior sealing properties can be provided. In addition, a sealing member capable of exhibiting high sealing properties with a small number of components can be provided.
FIG. 1 is a vertical sectional view of a turbo-molecular pump according to a first embodiment of the present invention;
FIG. 2A is an enlarged sectional view showing a part of the turbo-molecular pump according to the first embodiment, and FIG. 2B is an enlarged sectional view showing a part of a sealing member according to the first embodiment;
FIG. 3A is an explanatory view showing a function of the sealing member related to the turbo-molecular pump according to the first embodiment, FIG. 3B is an enlarged sectional view showing a part of a sealing member related to a turbo-molecular pump according to a second embodiment, and FIG. 3C is an enlarged sectional view showing a part of a sealing member related to a turbo-molecular pump according to a third embodiment;
FIGS. 4A to 4C are schematic views showing a result of a characteristic simulation when changing a groove depth of the sealing member according to the first embodiment, and FIG. 4D is a schematic view showing a result of a characteristic simulation of a general sealing member with an approximately circular cross-section; and
FIGS. 5A to 5C are schematic views showing a result of a characteristic simulation when changing a groove depth of the sealing member according to the second embodiment of the present invention.

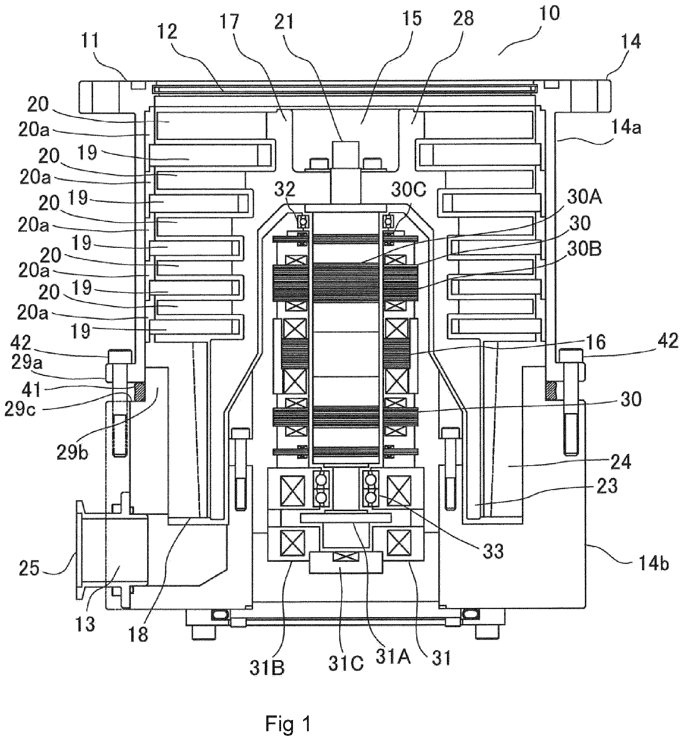

Hereinafter, vacuum pumps according to respective embodiments of the present invention will be described with reference to the drawings. First, a basic configuration of a vacuum pump will be described and, subsequently, a seal structure of a housing will be described. FIG. 1 schematically shows a vertical section of a turbo-molecular pump 10 as a vacuum pump according to a first embodiment of the present invention. The turbo-molecular pump 10 is configured to be connected to a vacuum chamber (not illustrated) of an object device such as a semiconductor manufacturing apparatus, an electron microscope, or a mass spectrometer.

The turbo-molecular pump 10 integrally includes a cylindrical pump main body 11 and a box-shaped electric case (not illustrated). In the pump main body 11 among these components, an upper side in FIG. 1 constitutes an intake portion 12 to be connected to a side of the object device and a lower side constitutes an exhaust portion 13 to be connected to an auxiliary pump or the like. In addition, besides an upright posture in a vertical direction such as that shown in FIG. 1, the turbo-molecular pump 10 can also be used in an upside-down posture, a horizontal posture, and an inclined posture.

While the electric case (not illustrated) houses a power supply circuit portion for supplying power to the pump main body 11 and a control circuit portion for controlling the pump main body 11, detailed descriptions of these components will be omitted here.

The pump main body 11 includes an approximately cylindrical main body casing 14. The main body casing 14 is constructed by connecting, in series in an axial direction, an intake-side casing 14a as an intake-side component that is positioned in an upper part in FIG. 1 and an exhaust-side casing 14b as an exhaust-side component that is positioned on a lower side in FIG. 1. In this case, the intake-side casing 14a can also be referred to as a casing or the like and the exhaust-side casing 14b can also be referred to as a base or the like.

The intake-side casing 14a and the exhaust-side casing 14b are stacked in the axial direction (an up-down direction in FIG. 1). In addition, in the intake-side casing 14a, an inner circumferential surface of a flange portion 29a formed at one end portion (a lower end portion in FIG. 1) in the axial direction opposes an outer circumferential surface in an upper end portion 29b of the exhaust-side casing 14b. Furthermore, the intake-side casing 14a is airtightly coupled to the exhaust-side casing 14b by a plurality of hexagon socket screws 42 so as to sandwich a sealing member 41. Details of the seal structure using the sealing member 41 will be provided later.

In addition, in FIG. 1, a left-side part of a peripheral portion of the upper end portion 29b of the exhaust-side casing 14b is drawn by a dashed-two dotted line. This virtually indicates that this portion of the exhaust-side casing 14b does not technically exist at a position shown in the vertical cross-section but exists behind the position in the vertical cross-section.

An exhaust mechanism portion 15 and a rotation driving portion (hereinafter, referred to as a "motor") 16 are provided inside the main body casing 14. Among these components, the exhaust mechanism portion 15 is a composite-type component made up of a turbo-molecular pump mechanism portion 17 and a thread groove pump mechanism portion 18.

The turbo-molecular pump mechanism portion 17 and the thread groove pump mechanism portion 18 are consecutively arranged in the axial direction of the pump main body 11 and, in FIG. 1, the turbo-molecular pump mechanism portion 17 is arranged on an upper side in the drawing and the thread groove pump mechanism portion 18 is arranged on a lower side in the drawing.

The turbo-molecular pump mechanism portion 17 arranged on the upper side in FIG. 1 transfers gas using a large number of turbine blades and includes stator blades 19 and rotor blades 20 having predetermined inclined or curved surfaces and being formed in a radial pattern. In addition, in the turbo-molecular pump mechanism portion 17, the stator blades 19 and the rotor blades 20 are arranged so as to be alternately lined up across approximately ten steps.

The stator blades 19 are mounted to stator blade spacers 20a. The stator blade spacers 20a are attached to an inner side surface (an inner circumferential surface) of the intake-side casing 14a so as to be stacked up along an axial direction of the intake-side casing 14a. In addition, intervals between the stator blades 19 are kept at a predetermined value by the stator blade spacers 20a.

Furthermore, rotor blades 20 penetrate between upper and lower stator blades 19. The rotor blades 20 are integrated with a cylindrical rotor 28, and the rotor 28 is concentrically fixed to a rotor shaft 21 so as to cover an outside of the rotor shaft 21. In addition, with a rotation of the rotor shaft 21, the rotor 28 rotates in a same direction as the rotor shaft 21 and the rotor 28.

In this case, an aluminum alloy is adopted as a material of main components of the pump main body 11, and materials of the exhaust-side casing 14b, the stator blades 19, the rotor 28, and the like are also aluminum alloys. In addition, in FIG. 1, in order to prevent the drawing from appearing excessively complicated, hatchings that indicate a cross section of components in the pump main body 11 have been omitted with the exception of certain components.

The rotor shaft 21 is machined into a stepped columnar shape and extends from the turbo-molecular pump mechanism portion 17 to the thread groove pump mechanism portion 18 on a lower side. In addition, the motor 16 is arranged in a center part in an axial direction of the rotor shaft 21. The motor 16 will be described later.

The thread groove pump mechanism portion 18 includes a rotor cylindrical portion 23 and a thread stator 24. Details of the rotor cylindrical portion 23 and the thread stator 24 will be provided later. An outlet port 25 to be connected to an exhaust pipe is arranged in a stage subsequent to the thread groove pump mechanism portion 18, and an inside of the outlet port 25 and the thread groove pump mechanism portion 18 are spatially connected to each other.

The motor 16 described above includes rotors (reference character omitted) fixed to an outer periphery of the rotor shaft 21 and stators (reference character omitted) arranged so as to surround the rotors. Power for operating the motor 16 is supplied by the power supply circuit portion or the control circuit portion housed in the electric case (not illustrated) described earlier.

A magnetic bearing that is a contactless bearing utilizing magnetic levitation is used to support the rotor shaft 21. As the magnetic bearing, two sets of radial magnetic bearings (magnetic bearings in a radial direction) 30 arranged above and below the motor 16 and one set of axial magnetic bearings (magnetic bearings in an axial direction) 31 arranged in a lower part of the rotor shaft 21 are used.

Among these components, each radial magnetic bearing 30 is constituted by a radial electromagnet target 30A formed on the rotor shaft 21, a plurality of (for example, two) radial electromagnets 30B that oppose the radial electromagnet target 30A, a radial direction displacement sensor 30C, and the like. The radial direction displacement sensor 30C detects a displacement in a radial direction of the rotor shaft 21. In addition, based on an output of the radial direction displacement sensor 30C, an excitation current of the radial electromagnet 30B is controlled and the rotor shaft 21 is levitated and supported so as to be rotatable around an axial center at a predetermined position in the radial direction.

The axial magnetic bearing 31 is constituted by a disk-shaped armature disk 31A attached to a portion on a lower end side of the rotor shaft 21, axial electromagnets 31B that oppose each other in a vertical direction so as to sandwich the armature disk 31A, an axial direction displacement sensor 31C installed at a position that is slightly separated from a lower end surface of the rotor shaft 21, and the like. The axial direction displacement sensor 31C detects a displacement in an axial direction of the rotor shaft 21. In addition, based on an output of the axial direction displacement sensor 31C, an excitation current of the upper and lower axial electromagnets 31B is controlled and the rotor shaft 21 is levitated and supported so as to be rotatable around an axial center at a predetermined position in the axial direction.

The use of the radial magnetic bearing 30 and the axial magnetic bearing 31 eliminates friction when the rotor shaft 21 (and the rotor blades 20) rotates at high speed and realizes an environment with a long lifetime and which does not require a lubricant. In addition, in the present embodiment, by using the radial direction displacement sensor 30C and the axial direction displacement sensor 31C, the rotor shaft 21 is allowed to be free only in a direction (θz) of rotation around the axial direction (a Z direction) and positional control is performed with respect to other five axial directions of X, Y, Z, θx, and θy.

Furthermore, protective bearings (also referred to as "touchdown (T/D) bearings", "backup bearings", and the like) 32 and 33 in a radial direction are arranged at predetermined intervals around upper and lower parts of the rotor shaft 21. For example, even when problems such as an electrical failure or an atmospheric entry occur, the protective bearings 32 and 33 prevent a position or a posture of the rotor shaft 21 from changing significantly and protect the rotor blades 20 and peripheral portions thereof from damage.

During an operation of the turbo-molecular pump 10 structured as described above, the motor 16 described earlier is driven and the rotor blades 20 rotate. In addition, with the rotation of the rotor blades 20, gas is sucked in from the intake portion 12 shown on an upper side in FIG. 1 and the gas is transferred to a side of the thread groove pump mechanism portion 18 while causing a gas particle to collide with the stator blades 19 and the rotor blades 20. Furthermore, the gas is compressed in the thread groove pump mechanism portion 18, the compressed gas enters the outlet port 25 from the exhaust portion 13, and the gas is exhausted from the pump main body 11 via the outlet port 25.

It should be noted that the rotor shaft 21 and rotors (reference characters omitted) of the rotor blades 20 that integrally rotate with the rotor shaft 21, the rotor cylindrical portion 23, and the motor 16 can be collectively referred to as, for example, "rotor portions", "rotating portions", or the like.

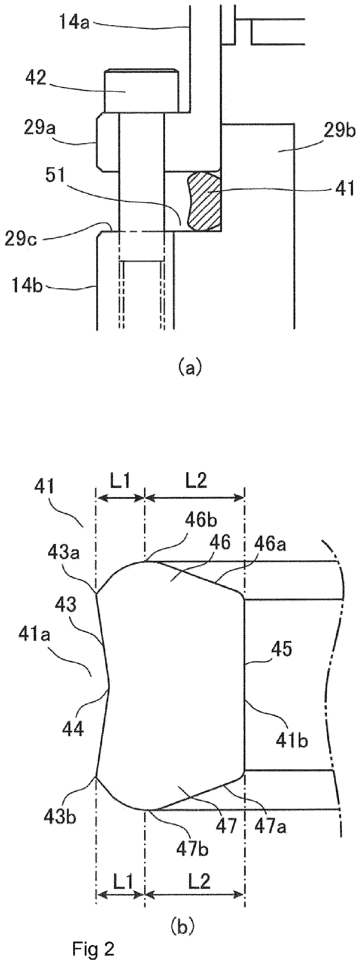

Next, the seal structure between the intake-side casing 14a and the exhaust-side casing 14b described earlier will be described. FIG. 2A shows a substantial part of the seal structure according to the present embodiment. The intake-side casing 14a and the exhaust-side casing 14b are in a state where the upper end portion 29b of the exhaust-side casing 14b slightly penetrates by predetermined fitting into the flange portion 29a that is formed in a lower end portion of the intake-side casing 14a.

Furthermore, the intake-side casing 14a and the exhaust-side casing 14b are stacked in the axial direction (an up-down direction in FIG. 1) while sandwiching the sealing member 41 described earlier between the flange portion 29a of the intake-side casing 14a and the upper end portion 29b of the exhaust-side casing 14b. In other words, in the present embodiment, a seal structure is adopted in which the intake-side casing 14a, the sealing member 41, and the exhaust-side casing 14b are arranged in the axial direction.

The sealing member 41 is molded in an O-ring shape and has an inner diameter (preferably, around 350 to 400 mm) that is more or less equal to an outer diameter of the upper end portion 29b in the exhaust-side casing 14b. As a material of the sealing member 41, for example, various materials generally used as an O-ring such as nitrile rubber (NBR) can be adopted.

The sealing member 41 has a deformed cross-sectional shape that differs from a simple shape such as a true circle or an ellipse. As shown in FIG. 2B, an outer peripheral surface 41a as an outer peripheral portion of the sealing member 41 is provided with a deformation promoting portion 43 that forms a space with a recessed shape along an entire periphery. The deformation promoting portion 43 is molded in a V-shape with a wider angle and a shallower depth than, for example, a standard alphabetical character "V". In addition, the deformation promoting portion 43 causes a linear groove bottom portion 44 over an entire periphery of the sealing member 41 to face outward in a radial direction (outer diameter direction) of the sealing member 41.

Corner portions 43a and 43b over an entire periphery are formed above and below (above and below in an axial direction) of the deformation promoting portion 43. In the present embodiment, the corner portions 43a and 43b are provided in angles that are obtuse in the illustrated cross-section.

A mounting portion 45 which is approximately flat and which is oriented in a direction opposite to the deformation promoting portion 43 is formed in an inner peripheral portion 41b of the sealing member 41. Furthermore, sealing portions 46 and 47 that protrude in a ridge shape are integrally provided in upper and lower portions of the sealing member 41 shown in FIG. 2A. Surfaces of the sealing portions 46 and 47 constitute sealing surfaces 46a and 47a that connect the deformation promoting portion 43 and the mounting portion 45 to each other.

In addition, a horizontal distance L1 from summit portions 46b and 47b that constitute projected ends of the sealing surfaces 46a and 47a to the deformation promoting portion 43 is set shorter than a horizontal distance L2 to the mounting portion 45. In addition, the summit portions 46b and 47b are molded in smooth arc shapes with a predetermined curvature. The larger the curvature (radius of curvature) of the summit portions 46b and 47b, the smoother the curve of the summit portions 46b and 47b. In the present embodiment, a sufficiently large curvature (radius of curvature) is adopted so that a shape of the summit portions 46b and 47b becomes relatively smooth.

The sealing member 41 described above is mounted while being slightly spread in a radial direction to a stepped portion 51 formed in an outer periphery of the exhaust-side casing 14b as shown in FIG. 2A. The stepped portion 51 is constituted by the upper end portion 29b of the exhaust-side casing 14b and a receiving surface 29c that spreads outward from a proximal end side of the upper end portion 29b. When the sealing member 41 is mounted to the stepped portion 51, the flat mounting portion 45 of the sealing member 41 comes into surface contact with an outer peripheral surface of the upper end portion 29b of the exhaust-side casing 14b.

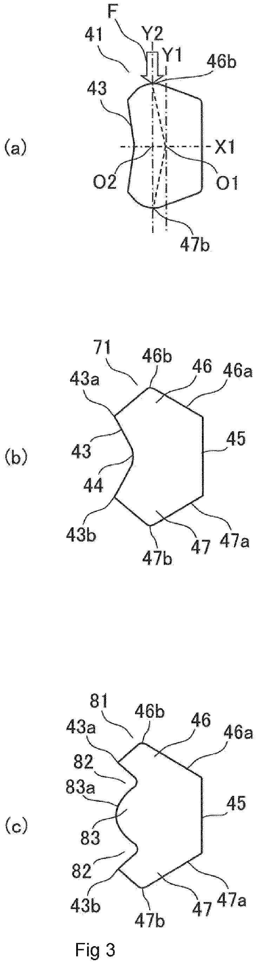

In addition, by having the hexagon socket screws 42 passed through the flange portion 29a of the intake-side casing 14a, screwed into the exhaust-side casing 14b, and tightened, the sealing member 41 receives a predetermined force (pressure) in the axial direction from the intake-side casing 14a and becomes compressed. Furthermore, in a state of being sandwiched between the flange portion 29a of the intake-side casing 14a and the upper end portion 29b of the exhaust-side casing 14b, the sealing member 41 is squashed by a predetermined amount while mainly causing the sealing portions 46 and 47 to elastically deform. In addition, the compression of the sealing member 41 takes place over the entire periphery. It should be noted that, in FIG. 2B and in FIG. 3A to be described later, in order to prevent the drawings from appearing excessively complicated, hatchings related to a cross section of the sealing member 41 have been omitted.

FIG. 3A shows a function of a seal structure using the sealing member 41. The sealing member 41 receives a load F from a side (an upper side in the drawing) on which the intake-side casing 14a is positioned.
In the sealing member 41, since the sealing portion 46 protrudes in a ridge shape as described earlier, the intake-side casing 14a initially comes into contact with the summit portion 46b of the sealing portion 46. In addition, as the intake-side casing 14a in contact with the summit portion 46b further descends, the load F from the intake-side casing 14a acts on the summit portion 46b of the sealing portion 46 as indicated by an arrow.

At this point, the summit portion 46b of the sealing portion 46 is a point of application of the load F. In addition, as shown in FIG. 2B, since the horizontal distance L1 from the summit portion 46b to the deformation promoting portion 43 is shorter than the horizontal distance L2 from the summit portion 46b to the mounting portion 45, a position of the point of application of the load F is a biased position that is closer to a side of the deformation promoting portion 43 than the mounting portion 45.

In addition, the load F is transferred to the side of the deformation promoting portion 43 in a greater proportion than to a side of the mounting portion 45. Furthermore, in addition to the load F, the deformation promoting portion 43 receives a reaction force from the upper end portion 29b of the exhaust-side casing 14b. Moreover, the sealing member 41 deforms inward with the groove bottom portion 44 of the deformation promoting portion 43 as a fold so that an opening width of the letter V relatively decreases.

Regarding a cross section of the sealing member 41 before being squashed, for example, let us assume that a point O1 is a position of a center of gravity as shown in FIG. 3A. In addition, let us assume two axes (an X1 axis and a Y1 axis) that are orthogonal to each other at the point O1.

Next, let us assume a vertical axis (a Y2 axis) that passes through the summit portions 46b and 47b, and let an intersection of the Y2 axis and the X1 axis described above be denoted by O2. The point O2 is biased (shifted to an eccentric position) to an outer side in the radial direction with respect to the point O1 and positioned closer to the deformation promoting portion 43 than the point O1. In addition, the load F from the intake-side casing 14a acts downward (immediately below) in the axial direction at the summit portion 46b.

Therefore, due to the load F, a moment centered on the intersection O1 is generated and the moment acts on the deformation promoting portion 43. In addition, the moment generated by the load F is transferred to the deformation promoting portion 43 at a position near the deformation promoting portion 43 and the sealing member 41 deforms. Furthermore, the deformation of the sealing member 41 takes place more efficiently than in a case where the load F acts from immediately above to immediately below the intersection O1.

It should be noted that the point O1 is not limited to the position of the center of gravity of the cross section as described above. For example, the X1 axis and the Y1 axis can also be assumed to simply intersect at a graphical center (a geometric center). Specifically, the X1 axis and the Y1 axis can be set so as to pass through a point that is half of a maximum width dimension (a maximum width) in a horizontal direction and half of a maximum height dimension (a maximum height or a maximum thickness) in a vertical direction of the cross section related to the sealing member 41 and to be orthogonal to each other, whereby an intersection of the X1 axis and the Y1 axis can be adopted as the point O1.

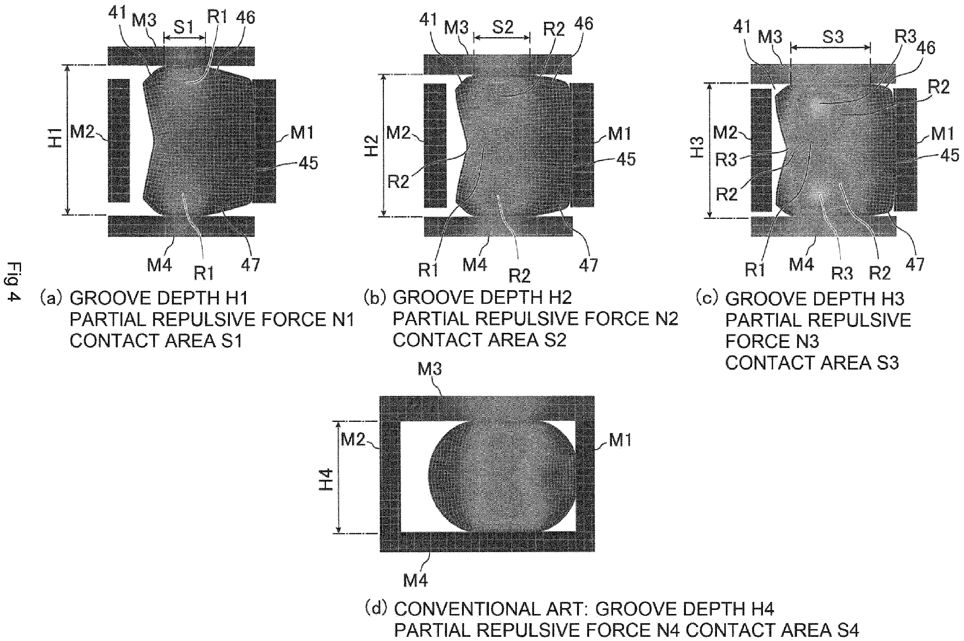

FIGS. 4A to 4C show a result (a simulation result) of performing a simulation of deformation characteristics regarding the sealing member 41 according to the present embodiment. As calculation conditions in the simulation, a cross-section model of the sealing member 41 is given physical property values related to the material of the sealing member 41, the mounting portion 45 is brought into contact with a virtual rigid body M1, and a gap is retained between a virtual rigid body M2 and the sealing member 41. Furthermore, spacing (a groove depth is assumed) between an upper virtual rigid body M3 and a lower virtual rigid body M4 is narrowed and varied so that the spacing gradually decreases in order from A to C, and a state of deformation and a calculation result of a stress distribution under each condition is represented on the cross-section model.

The virtual rigid bodies M1 and M4 described above correspond to the upper end portion 29b and the receiving surface 29c in the stepped portion 51 of the exhaust-side casing 14b according to the present embodiment (FIG. 2A). In addition, the virtual rigid body M3 corresponds to the flange portion 29a of the intake-side casing 14a in the present embodiment. While the virtual rigid body M2 is arranged on the side of the deformation promoting portion 43 of the sealing member 41 in the present simulation, a portion corresponding to the virtual rigid body M2 is not provided in the present embodiment shown in FIGS. 1, 2A, and the like and a gap is provided instead.

FIG. 4A shows a simulation result when a groove depth is set to H1. The groove depth corresponds to a distance between the virtual rigid body M3 and the virtual rigid body M4 in a state where the sealing member 41 has been squashed (distorted) to a certain degree. Furthermore, the groove depth H1 is a value in a case where the sealing member 41 prior to being compressed is squashed by around 0.5 mm each from both sides in the up-down direction (axial direction) (by around 1 mm as a sum of upward and downward).

In other words, the groove depth H1 represents a value in a case where a distance between the flange portion 29a of the intake-side casing 14a and the upper end portion 29b of the exhaust-side casing 14b becomes H1 and the sealing member 41 is squashed by 1 mm due to receiving a load. In addition, when the groove depth is H1, a partial repulsive force generated in the sealing member 41 is N1 and a contact area (in this case, a contact length) is S1.

In this case, the partial repulsive force represents a partial repulsive force (stress) in a predetermined region. In addition, the contact area (contact length) is an index that represents a magnitude relationship between areas by a magnitude relationship between lengths. Furthermore, in FIG. 4A, the contact area (contact length) is an index that can be alternatively represented by a length of a portion of the squashed sealing portion 46 (or 47) in contact with the virtual rigid body M3 (or M4).

In addition, a region denoted by reference character R1 in the drawing is a region with a larger repulsive force than a region not denoted by a reference character. Furthermore, a partial repulsive force calculated with respect to the region R1 can be described as the partial repulsive force N1 described above.

Next, FIG. 4B represents a simulation result when the groove depth is set to H2 which is smaller than in the case shown in FIG. 4A. The partial repulsive force in this case is N2 and the contact area (contact length) is S2. In addition, the partial repulsive force N2 and the contact area (contact length) S2 are both larger than the partial repulsive force N1 and the contact area (contact length) S1 in the case of the groove depth H1 shown in FIG. 4A.

In addition, regarding a distribution of repulsive forces, a region R2 has appeared in addition to the region R1. Furthermore, a partial repulsive force calculated with respect to the region R2 can be described as the partial repulsive force N2 described above. Moreover, a magnitude relationship between the repulsive forces represented by the regions R1 and R2 is larger in R2 than in R1 and may be expressed as N1 < N2.

Next, FIG. 4C represents a simulation result when the groove depth is set to H3 which is smaller than in the case shown in FIG. 4B. The partial repulsive force in this case is N3 and the contact area (contact length) is S3. In addition, the partial repulsive force N3 and the contact area (contact length) S3 are both larger than the partial repulsive force N2 and the contact area (contact length) S2 in the case of the groove depth H2 shown in FIG. 4B.

In addition, regarding a distribution of repulsive forces, a region R3 has appeared in addition to the regions R1 and R2. Furthermore, a partial repulsive force calculated with respect to the region R3 can be described as the partial repulsive force N3 described above. Moreover, a magnitude relationship among the repulsive forces represented by the regions R1 to R3 may be expressed as N1 < N2 < N3.

To summarize relationships represented by the simulation results shown in FIGS. 4A to 4C, the groove depths H1 to H3 may be expressed as H1 > H2 > H3 and the partial repulsive forces N1 to N3 may be expressed as N1 < N2 < N3. Furthermore, the contact areas (contact lengths) S1 to S3 may be expressed as S1 < S2 < S3.

In addition, FIG. 4D shows a simulation result of deformation characteristics regarding a conventional sealing member. As calculation conditions in the simulation shown in FIG. 4D, an approximately circular shape is assumed as a cross-sectional shape of the sealing member and physical property values related to a material of the sealing member are assumed to be similar to those of the examples shown in FIGS. 4A to 4C. In addition, while the virtual rigid bodies M1 to M4 are similar to those shown in FIGS.4A to 4C, in the example shown in FIG. 4D, the virtual rigid bodies M1 to M4 are represented as continuous rectangular-shaped models.

Furthermore, in the example shown in FIG. 4D, the groove depth is H4 which is a smaller value than the groove depth H3 (< H2 < H1) related to the example shown in FIG. 4C described earlier. In addition, the partial repulsive force is N4, and the partial repulsive force N4 has a value belonging to a range between the partial repulsive force N1 in the case of the groove depth H1 shown in FIG. 4A and the partial repulsive force N2 in the case of the groove depth H2 shown in FIG. 4B described above. Moreover, the contact area (contact length) is S4, and the contact area (contact length) S4 is more or less the same as the contact area (contact length) S3 in the case of the groove depth H3 shown in FIG. 4C.

To summarize relationships represented by the simulation result related to the conventional sealing member and the simulation results related to the sealing member 41 according to the present embodiment, the groove depths may be expressed as H4 < H3 (< H2 < H1) and the partial repulsive force N4 may be expressed as N1 < N4 < N2. Furthermore, the contact areas (contact lengths) may be expressed as S4 ≈ S3.

From these simulation results, it is safe to say that, with respect to the sealing member 41 according to the present embodiment, even when the groove depth is greater than what is conventional (H4 < H3), a high partial repulsive force (N4 < N3) and a contact area comparable to what is conventional (S4 ≈ S3) are obtained.

With the turbo-molecular pump 10 (FIG. 1) according to the first embodiment described above, the deformation promoting portion 43 with a recessed shape is provided on the outer peripheral surface 41a of the sealing member 41. Due to the presence of the deformation promoting portion 43, a space is formed in an outer periphery of the sealing member 41 and a resistance force related to deformation (deformation resistance) when the sealing member 41 is squashed in the thickness direction (axial direction) decreases. As a result, the sealing member 41 is readily deformable as compared to conventional sealing members of which cross-sections are a simple true circle or an ellipse.

In addition, the sealing member 41 can be prevented from becoming twisted or getting caught due to the deformation resistance of the sealing member 41 during assembly of the turbo-molecular pump 10 and a possibility of damage to the sealing member 41 can be further reduced. Furthermore, since application of vacuum grease to the sealing member 41 can now be omitted, for example, a loss of vacuum (contamination of a vacuum environment) caused by evaporation of the vacuum grease or the like can be prevented.

Furthermore, the sealing member 41 has sealing portions 46 and 47 that protrude toward a side that receives an external force (pressure). In addition, when the groove depth H decreases and an external force (F) increases, the sealing portions 46 and 47 become significantly elastically distorted in proportion thereto. Moreover, the sealing portions 46 and 47 deform along shapes of peripheral components (in this case, the flange portion 29a of the intake-side casing 14a and the receiving surface 29c of the exhaust-side casing 14b) and come into close contact with these peripheral components.

Therefore, due to the elastic deformation of the sealing portions 46 and 47, a contact area (or a contact length) S with the flange portion 29a of the intake-side casing 14a and the receiving surface 29c of the exhaust-side casing 14b which are pressurizing bodies can be more readily secured. In addition, sealing properties between the sealing member 41 and peripheral components improve.

In addition, even if a fluctuation (a variation) in squashing margin width increases due to a variation in a total tolerance (a cumulative tolerance) when accumulating dimensional tolerances related to a plurality of components during assembly of the turbo-molecular pump 10, the fluctuation in the squashing margin width can be absorbed by the elastic deformation of the sealing member 41. Furthermore, fluctuations in the squashing margin width can be accommodated in a flexible manner and a sealing member can be selected with greater ease.

Furthermore, with the sealing member 41 according to the present embodiment, since sealing properties related to a single sealing member 41 are improved, preferable sealing properties can be exhibited even without providing sealing members in multiple steps as in conventional turbo-molecular pumps (Japanese Patent No. 6113071). Therefore, preferable sealing properties can be exhibited with a small number of components while simplifying a seal structure. In addition, since there is no need to increase the number of sealing members or the number of peripheral components thereof, the seal structure can be simplified. As a result, the turbo-molecular pump 10 can be readily assembled.

Generally, with sealing members such as O-rings, when a sealing member is squashed by a large amount and distortion increases, a filling factor increases and makes the sealing member more susceptible to degradation. However, with the sealing member 41 according to the present embodiment, since deformation is promoted by the deformation promoting portion 43 with a recessed shape, deformation resistance is small and the sealing member 41 becomes more resistant to degradation even when the squashing amount is large.

Furthermore, since the summit portions 46b and 47b of the sealing portions 46 and 47 are arranged near the deformation promoting portion 43, due to a bias from the position of the center of gravity, a moment can be caused to act on the deformation promoting portion 43 in an efficient manner. This also contributes toward causing the sealing member 41 to elastically deform in an efficient manner.

In addition, with the sealing member 41 according to the present embodiment, since the flat mounting portion 45 is provided in the inner peripheral portion 41b, the sealing member 41 and the component (in this case, the exhaust-side casing 14b) to which the sealing member 41 is mounted can be readily brought into surface contact with each other. Therefore, tilting (so-called "falling") is less likely to occur on the sealing member 41 and the posture of the sealing member 41 can be readily stabilized. Furthermore, during assembly of the turbo-molecular pump 10, the sealing member 41 can be readily positioned and twisting of the sealing member 41 is less likely to occur.

Furthermore, with the sealing member 41 according to the present embodiment, since the deformation promoting portion 43 has an outward recessed shape, even when the sealing member 41 is squashed in the thickness direction (axial direction), an expansion part in an outer diameter direction is absorbed by the space inside the deformation promoting portion 43. Therefore, the sealing member 41 can be prevented from protruding in the radial direction and an outward expansion of the sealing member 41 can be suppressed. In particular, in the present embodiment, since hexagon socket screws 42 are arranged on an outer side of the sealing member 41, a situation such as the sealing member 41 expanding when being squashed and interfering with the hexagon socket screws 42 can be prevented.

In addition, by forming the deformation promoting portion 43 outward as in the present embodiment, a horizontal to vertical ratio of the cross section of the sealing member 41 can be made longer in the axial direction, which also contributes toward more readily preventing the sealing member 41 from expanding in the outer diameter direction. Furthermore, in the turbo-molecular pump 10, a difference in pressure between inside and outside the main body casing 14 that is created during operation causes a force (negative pressure) to be generated which sucks the sealing member 41 toward a side of an axial center (a center side in the radial direction) of the main body casing 14. Even when this force that sucks the sealing member 41 toward the side of the axial center acts on the sealing member 41, a wedge action is generated by the summit portions 46b and 47b and makes it difficult for the sealing member 41 to become sucked into the turbo-molecular pump 10 and, at the same time, prevents sealing properties from declining.

Furthermore, the present embodiment adopts a structure which prevents the sealing member 41 from coming into contact with peripheral components on an outer side in the radial direction. Therefore, a gap that is used as a "recess" can be secured in the outer peripheral portion of the sealing member 41. In addition, even if the sealing member 41 is squashed by a large amount and expands outward in the radial direction by a certain amount, the sealing member 41 can be prevented from coming into contact with the peripheral components.

In addition, with the sealing member 41 according to the present embodiment, since the sealing member 41 is less likely to protrude in the outer diameter direction, an outer diameter dimension of the main body casing 14 can be minimized. Furthermore, by reducing the outer diameter of the main body casing 14, interference with peripheral devices is less likely to occur and a degree of freedom when installing the turbo-molecular pump 10 increases.

It should be noted that the present invention is not limited to the embodiment described above. Hereinafter, sealing members of vacuum pumps according to other embodiments of the present invention will be described. Portions similar to those of the first embodiment will be assigned same reference characters and descriptions thereof will be omitted when appropriate.

FIG. 3B shows a sealing member 71 according to a second embodiment of the present invention. In a cross-sectional shape of the sealing member 71, angles of the upper and lower corner portions 43a and 43b of the deformation promoting portion 43 and summit portions 46b and 47b of the sealing portions 46 and 47 are made more acute than in the first embodiment shown in FIGS. 2B and 3A. In addition, the corner portions 43a and 43b now have acute angles. By making the angles more acute in this manner, partial repulsive forces can be increased and an improvement in a sealing effect due to high contact pressure between the intake-side casing 14a and the exhaust-side casing 14b can be achieved.

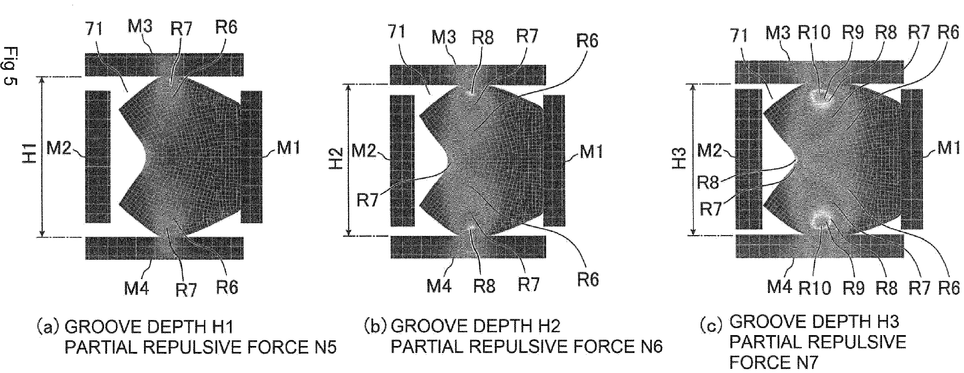

FIGS. 5A to 5C show a simulation result of deformation characteristics regarding the sealing member 71 according to the second embodiment. In the example shown in FIGS. 5A to 5C, respective conditions of an inner diameter dimension, an outer diameter dimension, a height (thickness) dimension, physical property values, and the like of the sealing member 71 are set similar to those of the simulation result according to the first embodiment shown in FIGS. 4A to 4C. In addition, conditions of groove depth are also similar to those of the simulation result according to the first embodiment and are expressed as H1 to H3 (H1 > H2 > H3) in an order of FIGS. 5A to 5C.

In the simulation result (the groove depth H1) shown in FIG. 5A, regions R6 and R7 have appeared. A magnitude relationship between repulsive forces in the regions R6 and R7 is expressed as R6 < R7. Furthermore, a partial repulsive force N5 calculated with respect to the simulation result region can be described as a predetermined partial repulsive force that is calculated with respect to the region R7. In addition, the partial repulsive force N5 is larger than N1 that is the partial repulsive force of the simulation result (the groove depth H1) according to the first embodiment shown in FIG. 4A (N5 > N1).

In the simulation result(the groove depth H2) shown in FIG. 5B , a region R8 has appeared in addition to regions R6 and R7. A magnitude relationship among repulsive forces in the regions R6 to R8 is expressed as R6 < R7 < R8. Furthermore, N6 calculated as a partial repulsive force is a predetermined partial repulsive force that is calculated with respect to the region R8. In addition, the partial repulsive force N6 is larger than N2 that is the partial repulsive force of the simulation result (the groove depth H2) according to the first embodiment shown in FIG. 4B (N6 > N2).

In the simulation result (the groove depth H3) shown in FIG. 5C, regions R9 and R10 have appeared in addition to regions R6 to R8. A magnitude relationship among repulsive forces in the regions R6 to R10 is expressed as R6 < R7 < R8 < R9 < R10. Furthermore, N7 calculated as a partial repulsive force is a predetermined partial repulsive force that is calculated with respect to the region R9. In addition, the partial repulsive force N7 is larger than N3 that is the partial repulsive force of the simulation result (the groove depth H3) according to the first embodiment shown in FIG. 4C (N7 > N3).

As represented by the simulation results described above, when using the sealing member 71 according to the second embodiment, a partial repulsive force can be increased by making corner portions (43a and 43b in FIG. 2B) more acute and an improvement in a partial sealing effect due to high contact pressure can be achieved. However, while a specific description will be omitted, a simulation result related to the contact area (contact length) decreases by making corner portions (43a and 43b in FIG. 2B) more acute as in the second embodiment.

Therefore, different sealing members can be used for different purposes such as adopting the sealing member 41 according to the first embodiment when prioritizing the contact area (contact length) over the partial repulsive force and adopting the sealing member 71 according to the second embodiment when prioritizing the partial repulsive force.

In addition, sealing members are not limited to those in the first and second embodiments and, for example, a sealing member 81 according to a third embodiment such as that shown in FIG. 3C can also be adopted. The sealing member 81 shown in FIG. 3C has two deformation promoting portions 82, and the deformation promoting portions 82 are separated from each other by a middle portion 83 having an arc-shaped protruding surface 83a. Furthermore, an amount of protrusion of the middle portion 83 is set so that the middle portion 83 does not protrude farther to an outer side of the sealing member 81 than the corner portions 43a and 43b. In addition, angles of the corner portions 42a and 42b and the summit portions 46b and 47b are similar to those in the sealing member 71 according to the second embodiment.

Moreover, the deformation promoting portion 43 is not limited to those in the first and second embodiments and, for example, the deformation promoting portion 43 can also be formed inward.

Adopting a cross-sectional structure of the sealing member 81 described above enables deformation due to pressure from peripheral components (in this case, the intake-side casing 14a and the exhaust-side casing 14b) to be promoted by the two deformation promoting portions 82 located above and below. While FIG. 3C shows the angles of the corner portions 42a and 42b and summit portions 46b and 47b being made acute in a similar manner to the sealing member 71 according to the second embodiment, angles are not limited thereto and, for example, the angles may be made obtuse so as to more or less equal the angles in the first embodiment.

It should be noted that the present invention is not limited to the embodiments described above and respective modifications thereof and various modifications can be made without departing from the spirit and scope of the invention.

- 10: Turbo-molecular pump (vacuum pump)
- 12: Intake portion
- 14: Main body casing
- 14a: Intake-side casing (intake-side component)
- 14b: Exhaust-side casing (exhaust-side component)
- 17: Turbo-molecular pump mechanism portion
- 18: Thread groove pump mechanism portion
- 19: Stator blade
- 20: Rotor blade
- 21: Rotor shaft (rotating shaft)
- 16: Motor
- 41, 71, 81: Sealing member
- 41a: Outer peripheral surface
- 41b: Inner peripheral portion
- 43: Deformation promoting portion
- 46, 47: Sealing portion
- 46b, 47b: Summit portion
- 45: Mounting portion

## Claims

1. A vacuum pump, comprising:
an intake-side component having an intake portion of gas;
an exhaust-side component which is combined with the intake-side component;
a rotating shaft which is enclosed by and rotatably supported by the intake-side component;
a motor that rotates the rotating shaft; and
an annular sealing member which elastically deforms under a sandwiching force in a thickness direction produced by the intake-side component and the exhaust-side component and which maintains airtightness between the intake-side component and the exhaust-side component, wherein
the sealing member has:
a deformation promoting portion formed in an outer peripheral portion in a recessed shape; and
a sealing portion which receives the force at an eccentric position approaching the deformation promoting portion.

2. The vacuum pump according to claim 1, wherein the sealing member has a mounting portion which is formed in a planar shape in an inner peripheral portion and which comes into surface contact with any one of the intake-side component and the exhaust-side component.

3. An annular sealing member which elastically deforms under a sandwiching force in a thickness direction produced by an intake-side component and an exhaust-side component of a vacuum pump, the sealing member comprising:
a deformation promoting portion formed in an outer peripheral portion in a recessed shape; and
a sealing portion which receives the force at an eccentric position approaching the deformation promoting portion.

4. The sealing member according to claim 3, comprising a mounting portion which is formed in a planar shape in an inner peripheral portion and which comes into surface contact with any one of the intake-side component and the exhaust-side component.
